(19) Europäisches Patentamt / European Patent Office / Office européen des brevets

(11) **EP 2 853 722 B1**

(12) **EUROPEAN PATENT SPECIFICATION**

(45) Date of publication and mention
of the grant of the patent:
**25.07.2018 Bulletin 2018/30**

(51) Int Cl.:
***F02D 31/00*** *(2006.01)*   ***F01M 5/02*** *(2006.01)*
***F02D 41/06*** *(2006.01)*

(21) Application number: **14186815.8**

(22) Date of filing: **29.09.2014**

(54) **System for preventing a mechanical damage of an internal combustion engine due to an inefficient lubrication of the engine**

System zur Vermeidung einer mechanischen Beschädigung einer Brennkraftmaschine durch eine ineffiziente Schmierung des Motors

Système pour empêcher un endommagement mécanique d'un moteur à combustion interne due à une lubrification inefficace du moteur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2013 IT MI20131608**

(43) Date of publication of application:
**01.04.2015 Bulletin 2015/14**

(73) Proprietor: **FPT Industrial S.p.A.**
**10156 Torino (IT)**

(72) Inventor: **AIMAR, Bruno**
**12020 CARTIGNANO (IT)**

(74) Representative: **Franzolin, Luigi et al**
**Studio Torta S.p.A.**
**Via Viotti, 9**
**10121 Torino (IT)**

(56) References cited:
JP-A- H02 119 626    JP-A- H04 303 128
JP-A- 2003 065 085    US-A1- 2002 151 229
US-A1- 2008 133 116    US-A1- 2011 106 414
US-A1- 2011 146 622

**Description**

<u>Application field of the invention</u>

The present invention refers to the field of the system for protecting the mechanical elements of an internal combustion engine, possibly supercharged. In particular the present invention refers to the field of the systems for preventing the damage of a turbo-supercharging unit. US2008133116 is considered to represent the closest prior art disclosing the feature of the preamble of claim 1.

<u>Description of the prior art</u>

The lubricating circuit of an internal combustion engine tends to empty, when the engine is stopped, due to the gravitational effect.

After starting the engine, a certain time is thus necessary to fill and pressurize the respective lubricating circuit.

Furthermore, the viscosity of the lubricating oil is highly influenced by the environmental conditions. Thus, when the engine is cold, at low temperature, the viscosity of the oil increases and consequently it takes more time for the oil to reach the different mechanical parts of the internal combustion engine, such as the housing of the turbine and/or the compressor and thus the bearings thereof.

In this interval of time, such mechanical parts run without oil, with a serious deterioration of the parts themselves.

Thus, such mechanical parts, above all belonging to the turbo-supercharger unit may have reliability problems if over-used before the lubricating circuit is efficient.

<u>Summary of the invention</u>

Therefore the aim of the present invention is to overcome all the aforementioned drawbacks and to provide a system for preventing a mechanical damage of an internal combustion engine, due to an inefficient lubrication of the latter.

The basic idea of the present invention is to provide a system that is able to estimate the inefficiency conditions of the lubricating circuit and to limit the degradation of the mechanical parts.

An object of the present invention is a system for preventing a mechanical damage of an internal combustion engine, due to an inefficient lubrication of the latter, in accordance with claim 1.

According to a preferred alternative embodiment of the invention, a possible over-use of the mechanical part of the engine, turbo-supercharger included, is estimated, limiting or inhibiting such over-use. In other words, the engine, as well as the supercharging unit, are forced to reduce their number of revolutions.

Another object of the present invention is an internal combustion engine equipped with the aforementioned control system.

A further object of the present invention is a vehicle comprising an internal combustion engine equipped with the aforementioned control system.

The claims are an integral part of the present description.

<u>Brief description of the Figures</u>

Further purposes and advantages of the present invention will become clear from the following detailed description of a preferred embodiment (and of its alternative embodiments) and the drawings that are attached hereto, which are merely illustrative and non-limitative, in which:

figure 1 shows schematically the system that is object of the present invention, applied to an internal combustion engine,
figure 2 shows a logic diagram of the functioning of the system of figure 1.

In the figures the same reference numbers and letters identify the same elements or components.

<u>Detailed description of preferred embodiments of the invention</u>

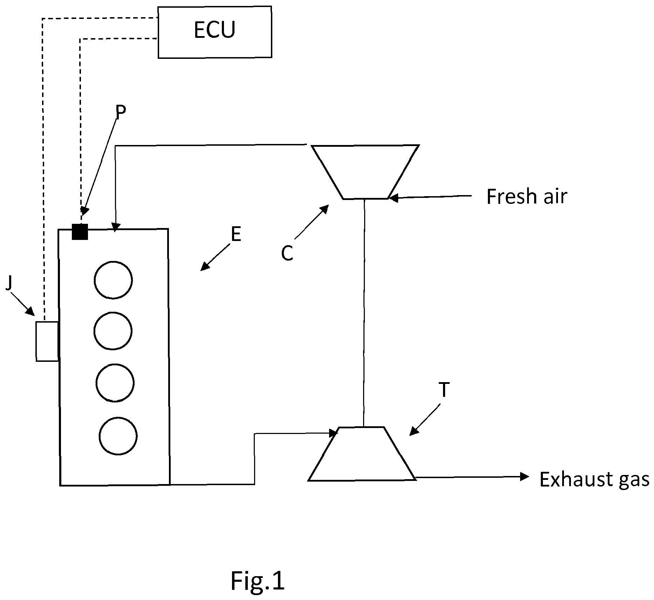

Figure 1 shows a scheme of an internal combustion engine E equipped with at least one turbo-supercharging stage comprising a turbine T having an inlet connected with the exhaust manifold of the internal combustion engine and a compressor C, driven by the turbine T, having an outlet connected with the intake manifold of the internal combustion engine E.

The engine is equipped per se with processing means, for example an engine control unit ECU, means for measuring a pressure of the lubricating oil P and supply means J, generally the fuel injection system, controlled by the engine control unit ECU and/or by means for controlling the supercharging of the internal combustion engine, namely at least one among:

- means for controlling the geometry of the turbine,
- means for controlling a waste gate valve,
- means for controlling an engine brake valve on the exhaust pipe upstream of the turbine,
- means for controlling an exhaust gas recirculation valve between the exhaust duct upstream of the turbine and the intake duct downstream of the compressor,
- means for controlling an air limiting valve (throttle) on the intake duct.

The system that is object of the invention allows to actuate a monitoring of the continuous type of the lubricating oil pressure and to actuate one or more prevention strategies, at least when the engine is started, as long as the oil pressure is stabilized and exceeds a predefined threshold.

Such strategies, for example, may include

- displaying a light or a message in the dashboard, which indicates a condition of "vehicle not ready" and/or
- limiting the torque delivered by the internal combustion engine and/or
- limiting the maximum number of revolutions per minute of the internal combustion engine and/or of a respective turbo-supercharging unit.

It is worth pointing out that the second and the third aforementioned strategies are strongly interrelated to each other, since a reduction of the revolutions per minute corresponds to a reduction of the torque delivered and vice versa.

For the rotating mechanical parts, the maximum number of revolutions per minute (rpm_max_no_lub) to which such part can be subjected when the lubricating circuit is not efficient, is defined during the design stage.

Such maximum number of revolutions per minute (rpm_max_no_lub) can be several times lower than the maximum number of revolutions per minute (rpm_max) that such parts can bear in conditions of optimal lubrication.

Preferably, when a possible over-use of the mechanical parts is detected, namely when the speed of rotation is too high, the system brings such speed of rotation back to the maximum acceptable speed in conditions of inefficient lubrication (rpm_max_no_lub).

According to a preferred embodiment of the invention, it is possible to intervene on the supply means J, after setting a fixed rpm limit in the supply map of the engine, or a variable rpm limit can be set, calculated according to the following formula:

$$\texttt{rpm = rpm\_mis - C\_mis x f(P,T)}$$

rpm: correct speed of rotation, namely forced by the prevention system,
rpm_mis: current speed of rotation,
C_mis: torque delivered
f(P,T): conversion factor of the torque delivered into rpm, as a function of ambient pressure P and of ambient temperature T.

A limitation of the number of revolutions per minute of the internal combustion engine consequently implies a reduction of the number of revolutions per minute of a respective turbo-supercharging unit.

According to another preferred alternative embodiment of the invention, the flow rate of the intake air of the engine is reduced, by means of at least one of

- means for controlling the geometry of the turbine,
- means for controlling a wastegate valve,
- means for controlling an engine brake valve on the exhaust pipe upstream of the turbine,
- means for controlling an exhaust gas recirculation valve
- between the exhaust duct upstream of the turbine and the intake duct downstream of the compressor,
- means for controlling an air limiting valve (throttle) on the intake duct,

so as to reduce the number of revolutions per minute of the turbo-supercharging unit.

It is evident that regardless of the fact that one acts either on the supply maps, namely on the injection system, or on the supercharging system, a reduction of the overall revolutions per minute of the engine, supercharging unit included, is obtained.

According to a preferred alternative embodiment of the invention, the prevention system is activated when the engine is started and stays active as long as a full filling and pressurization of the lubricating circuit is detected.

In these case there are two options:

the pressure of the lubricating oil is either measured or estimated.

It is worth pointing out that, since the pressure sensor is generally placed upstream of the turbine, it is necessary to estimate the pressurization time in the part of the circuit that is comprised between the sensor and the turbine, so as to avoid considering the circuit as completely efficient when it is not yet.

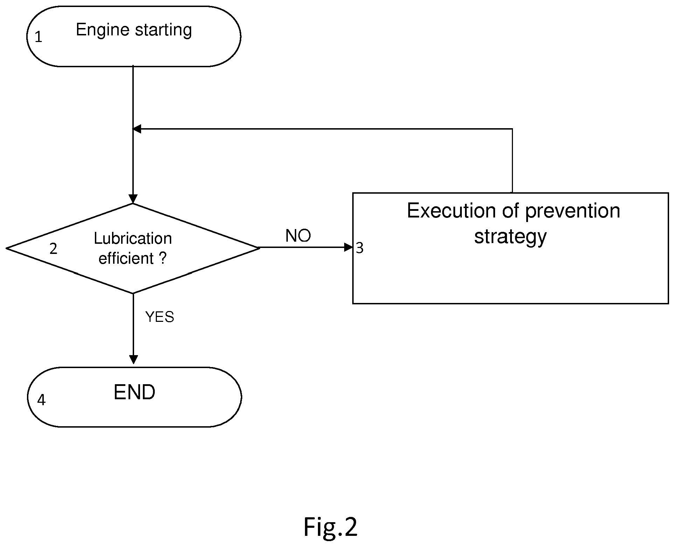

Figure 2 shows a flow diagram showing an implementation example of the present system:

- step 1: detection of the engine starting,
- step 2: measuring of a pressure value of the lubricating oil and if such value exceeds a predetermined threshold (SI), then
- step 3: the circuit is considered efficient, and the cycle is ended, otherwise
- step 4: (NO) execution of at least one of the aforementioned strategies and back to the measuring (step 2) of the pressure of the lubricating oil.

Thus, the system can be enabled at every starting of the engine and disabled as soon as the pressure of the lubrication oil reaches said predefined threshold.

The present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

By virtue of the present invention it is possible to avoid the over-use of the mechanical parts of the engine, reducing the probability of mechanical damages due to the non optimal lubrication thereof.

Futhermore, compared with solutions of the mechanical type, it is possible to avoid any mechanical modification that is usually more expensive than the present invention, which can be advantageously implemented via software, by means of the aforementioned engine control unit ECU, or by means of any further electronic control unit onboard of the vehicle.

From the description set forth above it will be possible for the person skilled in the art to embody the invention with no need of describing further construction details. The elements and the characteristics described in the different preferred embodiments may be combined without departing from the scope of the present application. What is described in the description of the prior art, if not explicitly excluded in the detailed description, has to be considered in combination with the characteristics of the present invention, forming an integral part of the present invention.

**Claims**

1.  System for preventing a mechanical damage of an internal combustion engine, due to an inefficient lubrication of the engine itself, comprising means for measuring or estimating a pressure of a lubrication circuit (P) of the internal combustion engine, processing means (ECU) configured to activate means for preventing a mechanical damage of the internal combustion engine (E) at each starting of the latter, as long as said pressure is below a predetermined threshold, said prevention means comprise means for limiting the maximum revolutions per minute of the internal combustion engine, **characterized in that** said limiting means are configured to force the speed of rotation of the engine to a value given by the following formula:

$$\mathrm{rpm = rpm\_mis - C\_mis \; x \; f(P,T)}$$

rpm_mis: current speed of rotation,
C_mis: torque delivered
f(P,T): conversion factor of the torque delivered into rpm, as a function of ambient pressure P and of ambient temperature T.

2.  System according to claim 1, wherein said prevention means comprise:

- a light or a message indicating a condition of "vehicle not ready" and/or
- means for limiting a torque delivered by the internal combustion engine and/or
- means for limiting the maximum revolutions per minute of a respective turbo-supercharging unit and/or
- means for controlling an exhaust gas recirculation valve between the exhaust pipe upstream of the turbine and the intake pipe downstream of the compressor and/or
- means for controlling an air limiting valve (throttle) on the intake pipe in order to reduce the number of revolutions per minute of the turbo-supercharging unit.

3. System according to claim 2, wherein when said prevention means comprise means for limiting a maximum number of revolutions per minute of the internal combustion engine, said prevention means are adapted to intervene on

- fuel supply means (J) of the internal combustion engine to reduce the number of revolutions per minute of the internal combustion engine (E) and consequently of the turbo-supercharging unit (T, C) and/or they are adapted to intervene on at least one of
- means for controlling the geometry of the turbine,
- means for controlling a waste gate valve,
- means for controlling an engine brake valve on the exhaust pipe upstream of the turbine,
- means for controlling an exhaust gas recirculation valve between the exhaust duct upstream of the turbine and the intake duct downstream of the compressor,
- means for controlling an air limiting valve (throttle) on the intake duct,

in order to reduce the number of revolutions per minute of the turbo-supercharging unit (T, C).

4. Method for actuating a system for preventing a mechanical damage of an internal combustion engine, due to an inefficient lubrication of the engine itself, according to any of the claims from 1 to 3, comprising the following steps:

- (step 1) detecting the engine starting,
- (step 2) measuring a pressure value of the lubricating oil and if such value exceeds a predetermined threshold (SI), then
- (step 3) the circuit is considered efficient, and the cycle is ended, otherwise
- (step 4) (NO) at least one prevention strategy is executed and back to the measuring (2) of the pressure of the lubricating oil;

the method being **characterized in that** said prevention strategy comprises the limiting of the engine revolution speed to a value given by the following formula:

$$\mathtt{rpm = rpm\_mis - C\_mis \ x \ f(P,T)}$$

rpm_mis: current speed of rotation,
C_mis: torque delivered
f(P,T): conversion factor of the torque delivered into rpm, as a function of ambient pressure P and of ambient temperature T.

5. Method according to claim 4, wherein said prevention strategy is at least one of the following:

- displaying a light or a message indicating a condition of "vehicle not ready" and/or
- limiting the torque delivered by the internal combustion engine and/or
- limiting the maximum number of revolutions per minute of a respective turbo-supercharging unit.

6. Computer program comprising program code means adapted to perform all the steps of one of the claims 4 or 5, when said program is run on a computer.

7. Computer-readable means comprising a recorded program, said computer-readable means comprising program code means adapted to perform all the steps of one of the claims 4 or 5, when said program is run on a computer.

8. Internal combustion engine comprising a system for preventing a mechanical damage of the engine itself, due to an inefficient lubrication, according to one of the claims from 1 to 3.

9.  Terrestrial vehicle comprising an internal combustion engine according to claim 8.


**Patentansprüche**

1.  System zum Verhindern eines mechanischen Schadens eines Verbrennungsmotors aufgrund einer unwirksamen Schmierung des Motors selbst, umfassend Mittel zum Messen oder Schätzen eines Drucks eines Schmierkreislaufs (P) des Verbrennungsmotors, Verarbeitungsmittel (ECU), die konfiguriert sind, um Mittel zum Verhindern eines mechanischen Schades des Verbrennungsmotors (E) bei jedem Start von letzterem zu aktivieren, solange der Druck unter einer vorbestimmten Schwelle liegt, wobei die Verhinderungsmittel Mittel zum Begrenzen der maximalen Umdrehungen pro Minute des Verbrennungsmotors umfassen, **dadurch gekennzeichnet, dass** die Begrenzungsmittel konfiguriert sind, um die Drehzahl des Motors auf einen Wert zu zwingen, der durch die folgende Formel gegeben ist:

$$rpm = rpm\_mis - C\_mis \ x \ f(P,T)$$

rpm_mis: aktuelle Drehzahl,
C_mis: abgegebenes Drehmoment
f(P,T): Umrechnungsfaktor des abgegebenen Drehmoments in rpm, als Funktion von Umgebungsdruck P und Umgebungstemperatur T.

2.  System nach Anspruch 1, wobei die Verhinderungsmittel Folgendes umfassen:

    - ein Licht oder eine Nachricht, die einen "Fahrzeug nicht bereit"-Zustand anzeigen, und/oder
    - Mittel zum Begrenzen eines Drehmoments, das durch den Verbrennungsmotor abgegeben wird, und/oder
    - Mittel zum Begrenzen der maximalen Umdrehungen pro Minute einer jeweiligen Turbo-Aufladeeinheit und/oder
    - Mittel zum Steuern eines Abgas-Rückführventils zwischen dem Abgasrohr stromaufwärts von der Turbine und dem Ansaugrohr stromabwärts von dem Verdichter und/oder
    - Mittel zum Steuern eines Luftbegrenzungsventils (Drosselklappe) auf dem Ansaugrohr, um die Anzahl von Umdrehungen pro Minute der Trubo-Aufladeeinheit zu verringern.

3.  System nach Anspruch 2, wobei, wenn die Verhinderungsmittel Mittel zum Begrenzen einer maximalen Anzahl von Umdrehungen pro Minute des Verbrennungsmotors umfassen, die Verhinderungsmittel ausgelegt sind, um bezüglich Folgender zu intervenieren:

    - Kraftstoffzuführmittel (J) des Verbrennungsmotors, um die Anzahl von Umdrehungen pro Minute des Verbrennungsmotors (E) und folglich der Turbo-Aufladeeinheit (T, C) zu verringern, und/oder
    sie ausgelegt sind, um bezüglich mindestens einem von Folgendem zu intervenieren:
    - Mittel zum Steuern der Geometrie der Turbine,
    - Mittel zum Steuern eines Wastegate-Ventils
    - Mittel zum Steuern eines Motorbremsventils auf dem Abgasrohr stromaufwärts von der Turbine,
    - Mittel zum Steuern eines Abgas-Rückführventils zwischen der Abgasleitung stromaufwärts von der Turbine und der Ansaugleitung stromabwärts von dem Verdichter,
    - Mittel zum Steuern eines Luftbegrenzungsventils (Drosselklappe) auf der Ansaugleitung,
    um die Anzahl von Umdrehungen pro Minute der Trubo-Aufladeeinheit (T, C) zu verringern.

4.  Verfahren zum Betätigen eines Systems zum Verhindern eines mechanischen Schadens eines Verbrennungsmotors aufgrund einer unwirksamen Schmierung des Motors selbst nach einem der Ansprüche 1 bis 3, das die folgenden Schritte umfasst:

    - (Schritt 1) Erfassen des Motorstartens,
    - (Schritt 2) Messen eines Druckwerts des Schmieröls und, ob ein derartiges Ventil eine vorbestimmte Schwelle (SI) überschreitet, dann
    - (Schritt 3) wird der Kreislauf als wirksam betrachtet und der Zyklus wird beendet, andernfalls
    - (Schritt 4) (NEIN) wird mindestens eine Verhinderungsstrategie ausgeführt und wieder bei dem Messen (2) des Drucks des Schmieröls eingesetzt,

wobei das Verfahren **dadurch gekennzeichnet ist, dass** die Verhinderungsstrategie das Begrenzen der Motordrehzahl auf einen Wert umfasst, der durch die folgende Formel gegeben ist:

$$rpm = rpm\_mis - C\ mis\ x\ f(P,T)$$

rpm_mis: aktuelle Drehzahl,
C_mis: abgegebenes Drehmoment
f(P,T): Umrechnungsfaktor des abgegebenen Drehmoments in rpm, als Funktion von Umgebungsdruck P und Umgebungstemperatur T.

5. Verfahren nach Anspruch 4, wobei die Verhinderungsstrategie mindestens eine der Folgenden ist:

   - Anzeigen eines Lichts oder einer Nachricht, die einen "Fahrzeug nicht bereit"-Zustand anzeigen, und/oder
   - Begrenzen des Drehmoments, der durch den Verbrennungsmotor abgegeben wird, und/oder
   - Begrenzen der maximalen Anzahl von Umdrehungen pro Minute einer jeweiligen Turbo-Aufladeeinheit.

6. Computerprogramm, das Programmcodemittel umfasst, die ausgelegt sind, um alle Schritte nach einem der Ansprüche 4 oder 5 durchzuführen, wenn das Programm auf einem Computer läuft.

7. Computer-lesbare Mittel, die ein aufgezeichnetes Programm umfassen, wobei die Computer-lesbaren Mittel Programmcodemittel umfassen, die ausgelegt sind, um alle Schritte nach einem der Ansprüche 4 oder 5 durchzuführen, wenn das Programm auf einem Computer läuft.

8. Verbrennungsmotor, der ein System zum Verhindern eines mechanischen Schadens des Motors selbst aufgrund einer unwirksamen Schmierung nach einem der Ansprüche 1 bis 3 umfasst.

9. Bodenfahrzeug, das einen Verbrennungsmotor nach Anspruch 8 umfasst.

**Revendications**

1. Système pour empêcher un endommagement mécanique d'un moteur à combustion interne, due à une lubrification inefficace du moteur lui-même, comprenant des moyens pour mesurer ou estimer une pression d'un circuit de lubrification (P) du moteur à combustion interne, des moyens de traitement (ECU) configurés pour activer des moyens pour empêcher un endommagement mécanique du moteur à combustion interne (E) à chaque démarrage de ce dernier, tant que ladite pression est au-dessous d'un seuil prédéterminé, lesdits moyens d'empêchement comprennent des moyens pour limiter le nombre de tours maximum par minute du moteur à combustion interne, **caractérisé en ce que** lesdits moyens de limitation sont configurés pour forcer la vitesse de rotation du moteur à une valeur donnée par la formule suivante :

$$rpm = rpm\_mis - C\_mis\ x\ f(P,\ T)$$

rpm_mis : vitesse de rotation actuelle,
C_mis : couple délivré,
f (P, T) ; facteur de conversion du couple délivré en tr/mn, en fonction de la pression ambiante P et de la température ambiante T.

2. Système selon la revendication 1, dans lequel lesdits moyens d'empêchement comprennent :

   - un voyant ou un message qui indique une condition « véhicule pas prêt » et/ou
   - des moyens pour limiter un couple délivré par le moteur à combustion interne et/ou
   - des moyens pour limiter le nombre de tours maximum par minute d'une unité de turbocompression respective et/ou
   - des moyens pour commander une soupape de recirculation des gaz d'échappement entre le tuyau d'échappement en amont de la turbine et le tuyau d'admission en aval du compresseur et/ou
   - des moyens pour commander une soupape de limitation d'air (papillon) sur le tuyau d'admission afin de réduire le nombre de tours par minute de l'unité de turbocompression.

3. Système selon la revendication 2, dans lequel, lorsque lesdits moyens d'empêchement comprennent des moyens pour limiter un nombre de tours maximum par minute du moteur à combustion interne, lesdits moyens d'empêchement sont adaptés pour intervenir sur

- des moyens de fourniture de carburant (J) du moteur à combustion interne pour réduire le nombre de tours par minute du moteur à combustion interne (E) et en conséquence de l'unité de turbocompression (T, C) et/ou ils sont adaptés pour intervenir sur au moins l'un
- des moyens pour commander la géométrie de la turbine,
- des moyens pour commander une soupape de décharge,
- des moyens pour commander un clapet de frein moteur sur le tuyau d'échappement en amont de la turbine,
- des moyens pour commander une soupape de recirculation des gaz d'échappement entre le conduit d'échappement en amont de la turbine et le conduit d'admission en aval du compresseur,
- des moyens pour commander une soupape de limitation d'air (papillon) sur le conduit d'admission,

afin de réduire le nombre de tours par minute de l'unité de turbocompression (T, C).

4. Procédé pour actionner un système pour éviter un endommagement mécanique d'un moteur à combustion interne, due a une lubrification inefficace du moteur lui-même, selon l'une quelconque des revendications 1 à 3, comprenant les étapes suivantes :

- (étape 1) détection du démarrage du moteur,
- (étape 2) mesure d'une valeur de pression de l'huile de lubrification et, si cette valeur dépasse un seuil prédéterminé (SI), alors
- (étape 3) le circuit est considéré comme efficace, et le cycle se termine, autrement
- (étape 4) (NON) au moins une stratégie de prévention est exécutée et retour à la mesure (2) de la pression de l'huile de lubrification ;

dans lequel le procédé est **caractérisé en ce que** ladite stratégie de prévention comprend la limitation de la vitesse de rotation du moteur à une valeur donnée par la formule suivante :

$$rpm = rpm\_mis - C\_mis \times f(P, T)$$

rpm_mis : vitesse de rotation actuelle,
C_mis : couple délivré
f (P, T) : facteur de conversion du couple délivré en tr/mn, en fonction de la pression ambiante P et de la température ambiante T.

5. Procédé selon la revendication 4, dans lequel ladite stratégie de prévention est au moins l'une des actions suivantes :

- l'affichage d'un voyant ou d'un message qui indique une condition « véhicule pas prêt » et/ou
- la limitation du couple délivré par le moteur à combustion interne et/ou
- la limitation du nombre de tours maximum par minute d'une unité de turbocompression respective.

6. Programme d'ordinateur qui comprend des moyens formant code de programme adaptés pour effectuer toutes les étapes de l'une des revendications 4 ou 5, lorsque ledit programme est exécuté sur un ordinateur.

7. Moyens pouvant être lus par un ordinateur comprenant un programme enregistré, lesdits moyens pouvant être lus par un ordinateur comprennent des moyens formant code de programme adaptés pour effectuer toutes les étapes de l'une des revendications 4 ou 5, lorsque ledit programme est exécuté sur un ordinateur.

8. Moteur à combustion interne comprenant un système pour éviter un endommagement mécanique du moteur lui-même, du fait d'une lubrification inefficace, selon l'une des revendications 1 à 3.

9. Véhicule terrestre qui comprend un moteur à combustion interne selon la revendication 8.

ECU

P

Fresh air

E

C

J

T

Exhaust gas

Fig.1

1    Engine starting

2   Lubrication efficient ?

NO     3   Execution of prevention strategy

YES

4    END

Fig.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008133116 A